# FASCICULE DE BREVET EUROPEEN

(11) **EP 2 943 364 B1**
(45) Date de publication et mention de la délivrance du brevet: **07.11.2018**
(21) Numéro de dépôt: 13818324.9
(22) Date de dépôt: 17.12.2013
(51) Int. Cl.: B60H 1/32

(54) **PROCÉDÉ D'ASSAINISSEMENT DE LIQUIDE PAR UTILISATION D'UNE SOURCE CHAUDE D'UN SYSTÈME, ET DISPOSITIF DE FOURNITURE DE LIQUIDE ASSAINI ASSOCIÉ**
VERFAHREN ZUR DESINFEKTION VON FLÜSSIGKEITEN MITTELS EINER WÄRMEQUELLE EINES SYSTEMS UND ZUGEHÖRIGE VORRICHTUNG ZUM ZUFÜHREN EINER DESINFIZIERTEN FLÜSSIGKEIT
METHOD FOR SANITIZING LIQUID USING A HOT SOURCE OF A SYSTEM, AND ASSOCIATED DEVICE FOR SUPPLYING SANITIZED LIQUID

(30) Priorité: 08.01.2013 FR 1350129
(43) Date de publication de la demande: 18.11.2015
(73) Titulaire: PSA Automobiles SA, 78300 Poissy (FR)
(72) Inventeur: DUMUR, Denis, F-78990 Elancourt (FR); PINTAT, Bruno, F-92140 Clamart (FR); KERVAREC, Florian, F-91310 Longpont Sur Orge (FR); POT, Vincent, F-75013 Paris (FR)
(86) Numéro de dépôt international: PCT/FR2013/053115
(87) Numéro de publication internationale: WO 2014/108613

(56) Documents cités:
- WO-A2-2009/037676
- FR-A1- 2 652 784
- FR-A1- 2 941 037
- US-A- 3 761 019
- US-A- 5 435 151
- US-A1- 2002 020 185

## Description

L'invention concerne le domaine de l'assainissement des liquides qui sont destinés à alimenter des réservoirs, eux-mêmes destinés à alimenter des dispositifs de fourniture de liquide au sein de systèmes tels que divulgués par US 5,435,151.

Cette invention concerne tout système devant être alimenté en liquide, directement ou indirectement (par exemple via un flux d'air traité), et comprenant au moins une installation de traitement d'air et un circuit de refroidissement d'un moteur thermique. Elle concerne donc, notamment et non limitativement, les systèmes comprenant une enceinte devant être alimentée par un flux d'air traité, comme par exemple un habitacle de véhicule, éventuellement de type automobile, ou une installation industrielle disposant d'au moins une pièce ou une salle, ou un habitat, ou une véranda, ou encore un local technique.

On notera que l'on entend ici par « flux d'air traité » un flux d'air ayant fait l'objet d'un chauffage ou d'un refroidissement, ainsi qu'éventuellement d'un rafraichissement par adjonction de petites gouttes de liquide.

De nombreux systèmes comprennent un dispositif de fourniture de liquide comportant, ou couplé à, un réservoir contenant un liquide, dont une partie peut éventuellement provenir de condensats récupérés. Comme le sait l'homme de l'art, la stagnation du liquide dans le réservoir et/ou la circulation du liquide dans des conduits (ou tuyaux) dans lesquels circule de l'air et/ou le dépôt de gouttes de condensation sur des parois internes de conduits (ou tuyaux) favorise(nt), hélas, le développement de bio films et/ou de bactéries et/ou d'algues, qui induisent généralement des odeurs nauséabondes dans l'enceinte concernée, et/ou de virus, qui peuvent ensuite diffuser dans l'enceinte concernée.

Afin de limiter ces développements, autant que faire se peut, plusieurs solutions ont déjà été proposées. Une première solution consiste à équiper le réservoir de résistances chauffantes qui sont destinées à chauffer le liquide qu'il contient à une température propre à l'assainir (typiquement entre environ 50°C et environ 70°C). Mais cela augmente notablement le coût du réservoir, complexifie sa fabrication, et consomme de l'énergie électrique.

Une deuxième solution consiste à adjoindre un produit de traitement (désinfectant ou décontaminant) dans le liquide stocké dans le réservoir, mais, cela peut induire des odeurs désagréables dans une enceinte lorsque ce liquide participe au traitement du flux d'air qui alimente cette enceinte. En outre, cela complexifie et/ou augmente l'encombrement du dispositif de fourniture de liquide, et nécessite des interventions manuelles, généralement relativement difficiles (du fait de l'exiguïté), pour renouveler régulièrement le produit de traitement.

Une troisième solution consiste à effectuer des purges régulières du réservoir. Mais cela nécessite des interventions manuelles, généralement relativement difficiles (du fait de l'exiguïté), pour renouveler intégralement et régulièrement le liquide.

L'invention a donc pour but d'améliorer la situation en tirant partie des sources chaudes qui sont présentes dans les systèmes comprenant une installation de traitement d'air produisant des condensats et un circuit de refroidissement d'un moteur thermique.

Elle propose notamment à cet effet un procédé selon la revendication 1.

L'invention propose également un dispositif selon la revendication 2.

Le dispositif de fourniture de liquide selon l'invention peut comporter d'autres caractéristiques qui peuvent être prises séparément ou en combinaison, et notamment :
- il peut comprendre des moyens de contrôle agencés pour contrôler une durée pendant laquelle s'effectue le transfert de calories en fonction de mesures de température de la source chaude ;
   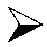 les moyens d'échange peuvent comprendre un second serpentin dans lequel circulent les condensats, collectés et portés à la température d'assainissement, et couplé à une source froide, qui appartient à l'installation de traitement d'air afin de transférer vers elle une partie des calories des condensats avant de transférer ces derniers dans le réservoir ;
- il peut être agencé pour transformer le liquide en petites gouttes au moyen d'une technique qui est choisie parmi (au moins) la nébulisation, la brumisation et la pulvérisation.

L'invention propose également un dispositif de traitement d'air, destiné à équiper un système comprenant une installation de traitement d'air produisant des condensats et un circuit de refroidissement d'un moteur thermique, et comprenant une partie au moins d'un dispositif de fourniture de liquide du type de celui présenté ci-avant.

L'invention propose également une installation de traitement d'air, destinée à équiper un système comprenant en outre un circuit de refroidissement d'un moteur thermique, et comprenant une partie au moins d'un dispositif de fourniture de liquide du type de celui présenté ci-avant ou une partie au moins d'un dispositif de traitement d'air du type de celui présenté ci-avant.

L'invention propose également un système comprenant une installation de traitement d'air produisant des condensats, un circuit de refroidissement d'un moteur thermique et au moins un dispositif de fourniture de liquide du type de celui présenté ci-avant ou au moins un dispositif de traitement d'air du type de celui présenté ci-avant.

Le système selon l'invention peut comporter d'autres caractéristiques qui peuvent être prises séparément ou en combinaison, et notamment :
- il peut constituer un véhicule, éventuellement de type automobile.
- dans un premier mode de réalisation son installation de traitement d'air peut comprendre un circuit de réfrigération comportant un compresseur qui alimente un conduit avec un fluide réfrigérant chaud, à l'état gazeux et constituant la source chaude ;
- dans un deuxième mode de réalisation son installation de traitement d'air peut comprendre un circuit de réfrigération comportant un condenseur qui alimente un conduit avec un fluide réfrigérant chaud, à l'état liquide et constituant la source chaude ;
- dans un troisième mode de réalisation son circuit de refroidissement peut comprendre un boîtier de dérivation propre à extraire une partie d'un fluide de refroidissement chaud, à l'état liquide et constituant la source chaude ;
- dans un quatrième mode de réalisation son circuit de refroidissement peut comprendre un aérotherme alimenté par un conduit avec un fluide de refroidissement chaud, à l'état liquide et constituant la source chaude.

D'autres caractéristiques et avantages de l'invention apparaîtront à l'examen de la description détaillée ci-après, et des dessins annexés, sur lesquels :

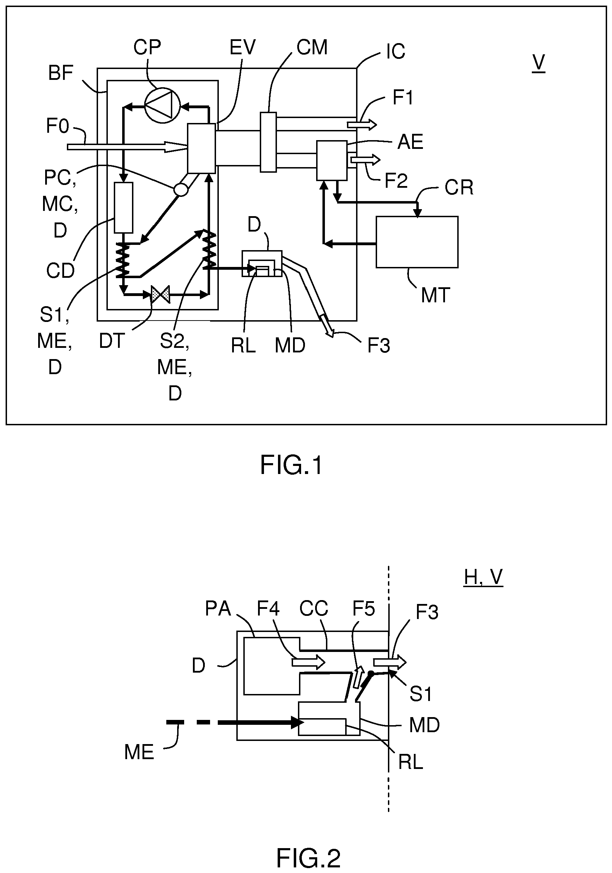

- la figure 1 illustre schématiquement et fonctionnellement un véhicule comprenant une installation de climatisation, un circuit de refroidissement d'un moteur thermique, et un dispositif de traitement d'air comportant un premier exemple de réalisation d'un dispositif de fourniture de liquide selon l'invention, ici couplé à la seule installation de climatisation,
- la figure 2 illustre schématiquement et fonctionnellement un exemple de réalisation du dispositif de traitement d'air de la figure 1, et

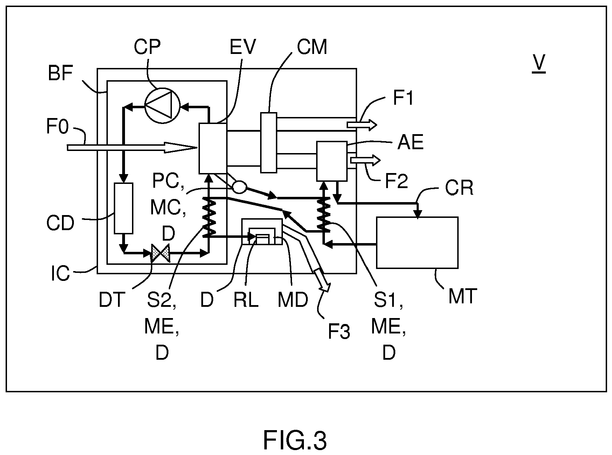

- la figure 3 illustre schématiquement et fonctionnellement un véhicule comprenant une installation de climatisation, un circuit de refroidissement d'un moteur thermique, et un dispositif de traitement d'air comportant un second exemple de réalisation d'un dispositif de fourniture de liquide selon l'invention, ici couplé à l'installation de climatisation et au circuit de refroidissement.

L'invention a notamment pour but de proposer un procédé destiné à assainir un liquide devant alimenter un réservoir RL faisant partie d'un dispositif de fourniture de liquide MD équipant un système V.

On considère dans ce qui suit, à titre d'exemple non limitatif, que le système V est un véhicule automobile, comme par exemple une voiture. Mais l'invention n'est pas limitée à ce type de système. Elle concerne en effet tout type de système comportant une installation de climatisation IC destinée à alimenter une enceinte H en flux d'air traité, un circuit de refroidissement CR d'un moteur thermique MT, et au moins un dispositif de fourniture de liquide MD. Par conséquent, l'invention concerne non seulement les véhicules, quel qu'en soit le type (terrestre (y compris les trains et tramways), maritime (ou fluvial) ou aérien), mais également les installations industrielles comportant au moins une pièce ou une salle, et les habitats, les vérandas et les locaux techniques, par exemple.

On a schématiquement représenté sur les figures 1 et 3 des véhicules V équipés chacun d'un dispositif de fourniture de liquide MD selon l'invention. On notera que dans les deux exemples de véhicule V illustrés sur les figures 1 et 3, le dispositif de fourniture de liquide MD fait partie d'un dispositif de traitement d'air D qui est destiné à fournir de l'air traité dans l'habitacle (ou enceinte) H, et qui fait lui-même éventuellement partie d'une installation de climatisation IC (comme illustré non limitativement). Cet agencement particulier (non limitatif) est destiné à permettre l'adjonction de petites gouttes de liquide à un flux d'air F3 devant alimenter l'habitacle H, éventuellement en complément de celui (F1 ou F2) qui est produit par l'installation de climatisation IC, et en vue du rafraichissement de certains au moins des passagers présents dans l'habitacle H et/ou du contrôle du taux d'humidité dans ce dernier (H).

Mais dans une variante de réalisation, le dispositif de fourniture de liquide MD pourrait être un équipement embarqué destiné, par exemple, à fournir un liquide de lavage pour des vitres, éventuellement d'une enceinte H, ou bien, à diffuser des gouttes de liquide dans une enceinte H (par nébulisation, brumisation ou pulvérisation, notamment).

Le dispositif de traitement d'air D peut être implanté dans la planche de bord du véhicule V, ou dans le pavillon (ou toit) du véhicule V, ou dans une console centrale installée entre deux sièges du véhicule V (afin de participer au confort thermique des passagers installés derrière ces deux sièges), ou dans un siège du véhicule V. Dans d'autres types de système, il pourrait être implanté dans un mur ou un montant ou encore un faux plafond d'un bâtiment, par exemple.

L'installation de climatisation IC est principalement logée dans le compartiment moteur (derrière le tablier qui permet la séparation d'avec l'habitacle H). Elle comprend notamment un circuit de réfrigération (ou boucle froide) BF chargé(e) de refroidir de l'air destiné, ici, à l'habitacle H, et un circuit de chauffage (ou bouche chaude) chargé(e) de réchauffer de l'air destiné, ici, à l'habitacle H.

Comme illustré, le circuit de réfrigération (ou boucle froide) BF comprend classiquement (et notamment) un compresseur CP, un condenseur CD, un détendeur DT et un évaporateur EV, dans lesquels et entre lesquels circule en circuit fermé, dans des conduits, un fluide frigorigène (ou réfrigérant) dans différentes phases, comme par exemple un CFC.

L'évaporateur EV est chargé de transformer le fluide frigorigène en phase liquide (basse température), issu du détendeur DT, en un fluide frigorigène en phase vapeur, par absorption des calories du flux d'air à refroidir qui est délivré sur une face avant (flèche F0) par un groupe moto-ventilateur (non représenté).

Le compresseur CP est chargé de transformer le fluide frigorigène en phase vapeur, issu de l'évaporateur EV, en un gaz surchauffé (par forte augmentation de pression et de température). La température maximale de ce gaz surchauffé est généralement égale à environ 100°C.

Le condenseur CD est chargé de transformer le gaz surchauffé, issu du compresseur CP, en un fluide frigorigène chaud et en phase liquide. La température maximale de ce liquide chaud est généralement égale à environ 60°C.

Le détendeur DT est chargé de dépressuriser le fluide frigorigène, sous forme au moins majoritairement liquide qui est issu du condenseur CD, avant qu'il n'alimente l'évaporateur EV. Il délivre donc un liquide refroidi et dépressurisé (ou basse pression).

On notera que dans les exemples non limitatifs illustrés sur les figures 1 et 3, le circuit de chauffage comprend essentiellement un aérotherme AE qui fait partie du circuit de refroidissement CR qui est couplé au moteur thermique MT du véhicule (ou système) V et qui est notamment chargé de refroidir ce moteur thermique MT. L'aérotherme AE est par exemple un échangeur de chaleur de type air/fluide qui est installé sous la planche de bord du véhicule V. On notera que cet aérotherme AE peut être éventuellement combiné à un radiateur électrique (éventuellement de type CTP).

Le flux d'air à traiter F0 est issu de l'extérieur du véhicule V et/ou de l'habitacle H (air recirculé). Il traverse l'évaporateur EV, où il est soit refroidi lorsque la fonction de climatisation a été sélectionnée, soit non traité lorsque la fonction de chauffage a été sélectionnée, puis, ici, parvient dans une chambre de mélange (ou de mixage) CM, où il est orienté soit vers un premier conduit débouchant dans l'habitacle H, lorsque ce dernier (H) doit être alimenté en air refroidi (flèche F1), soit vers l'aérotherme AE, où il est réchauffé, avant d'alimenter un second conduit débouchant dans l'habitacle H, lorsque ce dernier (H) doit être alimenté en air réchauffé (flèche F2).

Comme illustré sur les figures 1 et 3, un dispositif de fourniture de liquide MD, selon l'invention, comprend un réservoir RL, des moyens de collection MC et des moyens d'échange ME.

Le réservoir RL est destiné à être alimenté avec un liquide provenant au moins en partie de condensats collectés par les moyens de collection MC. Il est chargé d'alimenter des moyens de fourniture de liquide qui font partie de son dispositif de fourniture de liquide MD, mais qui ne sont pas détaillés sur les figures. Ces moyens de fourniture de liquide peuvent être, par exemple, des moyens de diffusion chargés de produire des (très) petites gouttes, par exemple par nébulisation, brumisation ou pulvérisation.

La nébulisation est une technique avantageuse du fait qu'elle permet de produire, sous la forme d'un «brouillard» ou d'une «brume», des gouttes de très petit diamètre (typiquement compris entre environ 2 µm et environ 5 µm) qui, une fois mélangées à un flux d'air, permettent à ce dernier de procurer une sensation de fraicheur à des passagers. Toute technique de nébulisation connue de l'homme de l'art, y compris miniaturisée, peut être ici utilisée. A titre d'exemple, il peut s'agir d'une technique par effet piézoélectrique, bien connue de l'homme de l'art. Il est rappelé que cette technique utilise au moins un oscillateur piézoélectrique (éventuellement miniaturisé), couplé à une chambre de nébulisation et vibrant à très haute fréquence lorsqu'il est alimenté en tension (ici par le réseau électrique du véhicule). Par exemple, dans le cas d'un nébuliseur ultrasonique, la surface vibrante est actionnée par des ultrasons (c'est-à-dire selon une fréquence supérieure à 20000 Hz). Cet oscillateur piézoélectrique est immergé dans le liquide à nébuliser afin de générer à la surface de ce le liquide une brume ou un brouillard composé(e) de gouttelettes de dimensions microscopiques qui sont entrainées par dépression ou au moyen d'un petit flux d'air généré par un ventilateur situé dans les moyens de diffusion, par exemple.

L'alimentation en courant des moyens de diffusion peut, par exemple, se faire via un câble électrique (non représenté) qui est connecté (ici) au réseau électrique du véhicule. Mais elle pourrait également se faire via une batterie indépendante, comme par exemple une pile.

Comme illustré sur la figure 2, les gouttes de liquide qui sont produites par le dispositif de fourniture de liquide MD alimentent ici, au niveau d'un passage, un conduit CC faisant partie du dispositif de traitement d'air D. Ce conduit CC est agencé de manière à permettre la circulation (flèche F4) d'un flux d'air à traiter destiné à alimenter l'enceinte H (ici une partie au moins d'un habitacle de véhicule V). Il comprend à cet effet au moins une sortie S1 qui communique directement ou indirectement (par exemple via un aérateur) avec l'enceinte H (flèche F3).

On notera que dans l'exemple de réalisation non limitatif illustré sur la figure 2, le flux d'air F4 qui alimente le conduit CC est fourni par un pulseur PA qui fait partie du dispositif de traitement d'air D et qui aspire de l'air extérieur. Mais cela n'est pas obligatoire. En effet, ce flux d'air F4 pourrait être fourni par une sortie (éventuellement dédiée) de l'installation de climatisation IC.

L'alimentation en courant de l'éventuel pulseur PA peut, par exemple, se faire via un câble électrique (non représenté) qui est connecté (ici) au réseau électrique du véhicule V. Mais elle pourrait également se faire via une batterie indépendante, comme par exemple une pile.

Le conduit CC comprend de préférence un passage dont l'accès est contrôlé et qui est connecté à une sortie du dispositif de fourniture de liquide MD. Cela permet de transférer dans le conduit CC (flèche F5) des gouttes de liquide produites par le dispositif de fourniture de liquide MD, pour compléter le traitement du flux d'air, et plus précisément pour augmenter son taux d'humidité.

Comme illustré non limitativement sur la figure 2, l'accès au passage peut être contrôlé par un volet (motorisé), par exemple de type drapeau ou papillon, et faisant partie du dispositif de traitement d'air D. L'alimentation en courant de ce volet motorisé peut, par exemple, se faire via un câble électrique (non représenté) qui est connecté (ici) au réseau électrique du véhicule V. Mais elle pourrait également se faire via une batterie indépendante, comme par exemple une pile. Par ailleurs, le contrôle de la position de ce volet peut être assuré par des moyens de contrôle faisant partie du dispositif de traitement d'air D et non représentés. Ce contrôle de position peut, par exemple, se faire en fonction d'une mesure d'humidité effectuée dans l'habitacle H par un capteur. Ce dernier fait éventuellement partie du dispositif de traitement d'air D, mais cela n'est pas obligatoire.

Les moyens de collection MC sont agencés pour collecter une partie au moins des condensats qui sont produits par l'installation de traitement d'air IC, et plus précisément par l'évaporateur EV de son circuit de réfrigération BF.

Ils comprennent à cet effet un réceptacle placé sous l'évaporateur EV, et de préférence couplé à une pompe électrique PC destinée à alimenter les moyens d'échange ME en condensats collectés selon un débit choisi.

Les moyens d'échange ME sont agencés pour transférer des calories d'une source chaude, qui appartient à l'installation de traitement d'air IC ou au circuit de refroidissement CR, vers les condensats collectés, afin de les porter à une température qui est propre à les assainir avant de les transférer dans le réservoir RL.

Il est important de noter que le dispositif de fourniture de liquide MD, décrit ci-avant, est propre à mettre en oeuvre un procédé selon l'invention qui est destiné à assainir un liquide devant alimenter le réservoir RL du dispositif de fourniture de liquide MD, et qui comprend une étape dans laquelle on collecte une partie au moins des condensats (produits par l'installation de traitement d'air IC), puis on transfère des calories d'une source chaude de l'installation de traitement d'air IC ou du circuit de refroidissement CR, vers les condensats collectés, afin de les porter à une température propre à les assainir avant qu'ils n'alimentent le réservoir RL.

On notera que selon les besoins le transfert des condensats dans les moyens d'échange ME peut s'effectuer selon un mode temporaire (ou transitoire) ou selon un mode continu (ou permanent).

Le mode temporaire est notamment utile lorsque l'on veut contrôler la température à laquelle on veut porter les condensats collectés. Dans ce cas, l'objectif consiste à attendre que la température de la source chaude soit suffisamment élevée, par exemple supérieure à 80°C, avant de mettre en marche la pompe électrique PC pour qu'elle alimente en condensats les moyens d'échange ME couplés, notamment, à la source chaude. Par exemple, le débit de la pompe PC peut être choisi de sorte que le transport des condensats se fasse au moins pendant trois minutes à 60°C et pendant au moins une minute à 80°C (ces durées dépendent notamment des moyens d'échange ME).

Il est rappelé que plus la température de chauffage des condensats est élevée, plus l'assainissement est efficace et rapide. Par exemple, une température supérieure ou égale à 70°C permet d'induire une destruction très rapide et quasi-totale des bactéries, alors qu'une température d'environ 50°C pendant environ deux heures ne permet d'induire qu'environ 90% de destruction des bactéries, et qu'une température d'environ 60°C pendant environ deux minutes ne permet d'induire qu'environ 90% de destruction des bactéries.

On notera que l'information relative à la température de la source chaude peut être issue d'une sonde thermique ou d'un calcul.

Lorsque l'on souhaite disposer d'un mode temporaire, le dispositif de fourniture de liquide MD doit comprendre des moyens de contrôle agencés pour contrôler la durée pendant laquelle s'effectue le transfert de condensats dans les moyens d'échange ME, en fonction de mesures de température de la source chaude.

On notera également que le mode de fonctionnement continu est bien adapté au cas où l'on veut élever sensiblement en permanence la température du liquide contenu dans le réservoir RL. Cela peut être par exemple utile lorsque le dispositif de fourniture de liquide MD est chargé de fournir un liquide de lavage pour des vitres. En effet, dans ce cas la température élevée du liquide de lavage est de nature à favoriser le dégraissage et le dégivrage des vitres.

La source chaude peut avoir différentes origines qui, pour certaines d'entre elles, sont décrites ci-après en référence aux figures 1 et 3.

Dans le premier exemple non limitatif illustré sur la figure 1, la source chaude est le fluide réfrigérant chaud et à l'état liquide qui circule dans un conduit qui est alimenté par la sortie du condenseur CD du circuit de réfrigération BF et qui alimente le détendeur DT de ce dernier (BF). Cette solution permet d'obtenir une température d'environ 60°C lorsque le compresseur CP fonctionne avec sa cylindrée maximale.

Dans une variante de réalisation non représentée, la source chaude pourrait être le fluide réfrigérant chaud et à l'état gazeux qui circule dans un conduit qui est alimenté par la sortie du compresseur CP du circuit de réfrigération BF et qui alimente le condenseur CD. Cette solution permet d'obtenir une température d'environ 100°C lorsque le compresseur CP fonctionne avec sa cylindrée maximale.

Dans le second exemple non limitatif illustré sur la figure 3, la source chaude est le fluide de refroidissement chaud et à l'état liquide qui circule dans un conduit du circuit de refroidissement CR. Ce conduit peut être alimenté par le moteur thermique MT et peut alimenter l'aérotherme AE, ou bien il peut être alimenté par l'aérotherme AE et peut alimenter le moteur thermique MT. La température maximale de ce fluide de refroidissement est généralement égale à environ 80°C dans le premier cas, et à environ 60°C dans le second cas.

Dans une variante de réalisation non représentée, la source chaude pourrait être une partie du fluide de refroidissement chaud et à l'état liquide qui circule dans un conduit du circuit de refroidissement CR et qui est extraite par un boîtier de dérivation de ce dernier (CR). Ce boîtier de dérivation est monté sur le circuit de refroidissement CR à un endroit où le fluide de refroidissement est (le plus) chaud. La température maximale de ce fluide de refroidissement est généralement égale à environ 80°C à cet endroit.

Comme illustré non limitativement sur les figures 1 et 3, les moyens d'échange ME peuvent comprendre au moins un premier serpentin S1 dans lequel circulent les condensats collectés (et ici fournis par la pompe électrique PC) et couplé à la source chaude afin de transférer une partie de ses calories vers les condensats collectés. Par exemple, ce premier serpentin S1 peut être enroulé étroitement autour du conduit dans lequel circule la source chaude. On notera que la longueur de la spirale du premier serpentin S1 et la section interne de ce dernier (S1) influent sur la durée de l'assainissement des condensats collectés.

On notera également que les moyens d'échange ME peuvent éventuellement comprendre, comme illustré non limitativement, un second serpentin S2 dans lequel circulent les condensats collectés, après qu'ils aient été portés à la température d'assainissement, et couplé à une source froide appartenant à l'installation de traitement d'air IC. On comprendra que ce second serpentin S2 est destiné à transférer vers la source froide une partie des calories des condensats avant qu'ils ne soient transférés dans le réservoir RL par un conduit connecté à sa sortie. Par exemple, ce second serpentin S2 peut être enroulé étroitement autour du conduit dans lequel circule la source froide.

Comme illustré non limitativement sur les figures 1 et 3, la source froide peut être le fluide réfrigérant refroidi, à l'état liquide et dépressurisé qui circule dans un conduit qui est alimenté par la sortie du détendeur DT du circuit de réfrigération BF et qui alimente l'évaporateur EV de ce dernier (BF). Cette solution permet de refroidir les condensats à une température comprise entre environ 3°C et environ 10°C lorsque le compresseur CP fonctionne avec sa cylindrée maximale. On notera que l'on peut déterminer par le calcul le nombre de spires du second serpentin S2 permettant d'obtenir une température inférieure à 30°C après refroidissement.

L'invention offre plusieurs avantages, parmi lesquels :
- la gratuité de l'assainissement, du fait de l'absence de produit de traitement et de l'absence de résistance thermique,
- une automatisation de l'assainissement sans aucune intervention manuelle de maintenance.

## Revendications

1. Procédé d'assainissement d'un liquide devant alimenter un réservoir (RL) propre à alimenter un dispositif de fourniture de liquide (MD) d'un système (V) comprenant une installation de traitement d'air (IC) produisant des condensats et un circuit de refroidissement (CR) d'un moteur thermique (MT), ledit procédé comprenant une étape dans laquelle on collecte une partie au moins desdits condensats, puis on transfère des calories d'une source chaude, appartenant à ladite installation de traitement d'air (IC) ou audit circuit de refroidissement (CR), vers lesdits condensats collectés, afin de les porter à une température propre à les assainir avant qu'ils n'alimentent ledit réservoir (RL), **caractérisé en ce qu'**après avoir porté lesdits condensats collectés à ladite température d'assainissement et avant qu'ils n'alimentent ledit réservoir (RL), on transfère une partie des calories qu'ils comprennent vers une source froide appartenant à ladite installation de traitement d'air (IC).

2. Dispositif de fourniture de liquide (MD) comprenant un réservoir de liquide (RL), i) des moyens de collection (MC) agencés pour collecter une partie au moins de condensats produits par une installation de traitement d'air (IC) d'un système (V) comprenant en outre un circuit de refroidissement (CR) d'un moteur thermique (MT), et ii) des moyens d'échange (ME) alimentés en condensats collectés par lesdits moyens de collection (MC) et agencés pour transférer des calories d'une source chaude, appartenant à ladite installation de traitement d'air (IC) ou audit circuit de refroidissement (CR), vers lesdits condensats collectés, afin de les porter à une température propre à les assainir avant de les transférer dans ledit réservoir (RL), **caractérisé en ce que** lesdits moyens d'échange (ME) comprennent un premier serpentin (S1) dans lequel circulent lesdits condensats collectés et portés à ladite température d'assainissement et couplé à une source chaude appartenant à ladite installation de traitement d'air (IC) afin de transférer vers elle une partie des calories desdits condensats avant de transférer ces derniers dans ledit réservoir (RL).

3. Dispositif selon la revendication 2, **caractérisé en ce qu'**il comprend des moyens de contrôle agencés pour contrôler une durée pendant laquelle s'effectue ledit transfert de calories en fonction de mesures de température de ladite source chaude.

4. Dispositif selon l'une des revendications 2 et 3, **caractérisé en ce que** lesdits moyens d'échange (ME) comprennent au moins un second serpentin (S2) dans lequel circulent lesdits condensats collectés et couplé à ladite source froide afin de transférer une partie de ses calories vers lesdits condensats collectés.

5. Dispositif selon l'une des revendications 2 à 4, **caractérisé en ce qu'**il est agencé pour transformer ledit liquide en petites gouttes au moyen d'une technique choisie dans un groupe comprenant au moins la nébulisation, la brumisation et la pulvérisation.

6. Dispositif de traitement d'air (D) pour un système (V) comprenant une installation de traitement d'air (IC) produisant des condensats et un circuit de refroidissement (CR) d'un moteur thermique (MT), **caractérisé en ce qu'**il comprend un dispositif de fourniture de liquide (MD) selon l'une des revendications 2 à 5.

7. Installation de traitement d'air (IC) pour un système (V) comprenant en outre un circuit de refroidissement (CR) d'un moteur thermique (MT), **caractérisée en ce qu'**elle comprend un dispositif de fourniture de liquide (MD) selon l'une des revendications 2 à 5 ou un dispositif de traitement d'air (D) selon la revendication 6.

8. Système (V) comprenant une installation de traitement d'air (IC) produisant des condensats et un circuit de refroidissement (CR) d'un moteur thermique (MT), **caractérisé en ce qu'**il comprend en outre au moins un dispositif de fourniture de liquide (MD) selon l'une des revendications 2 à 5 ou au moins un dispositif de traitement d'air (D) selon la revendication 6.

9. Système selon la revendication 8, **caractérisé en ce que** ladite installation de traitement d'air (IC) comprend un circuit de réfrigération (BF) comportant un condenseur (CD) alimentant un conduit avec un fluide réfrigérant chaud, à l'état liquide et constituant une source chaude.

10. Système selon la revendication 8, **caractérisé en ce que** ladite installation de traitement d'air (IC) comprend un circuit de réfrigération (BF) comportant un compresseur (CP) alimentant un conduit avec un fluide réfrigérant chaud, à l'état gazeux et constituant une source chaude.

11. Système selon la revendication 8, **caractérisé en ce que** ledit circuit de refroidissement (CR) comporte un aérotherme (AE) alimenté par un conduit avec un fluide de refroidissement chaud, à l'état liquide et constituant ladite source chaude.

12. Système selon la revendication 8, **caractérisé en ce que** ledit circuit de refroidissement (CR) comporte un boîtier de dérivation propre à extraire une partie d'un fluide de refroidissement chaud, à l'état liquide et constituant une source chaude.

13. Système selon l'une des revendications 8 à 12, **caractérisé en ce qu'**il constitue un véhicule.

## Patentansprüche

1. Verfahren zur Desinfektion einer Flüssigkeit, mit der ein Behälter (RL) versorgt werden soll, der geeignet ist, eine Vorrichtung zum Zuführen von Flüssigkeit (MD) eines Systems (V) zu versorgen, umfassend eine Luftaufbereitungsanlage (IC), die Kondensat erzeugt, und einen Kühlkreis (CR) eines Verbrennungsmotors (MT), wobei das Verfahren einen Schritt umfasst, bei dem mindestens ein Teil des Kondensats gesammelt wird, dann die Kalorien einer Wärmequelle, die zu der Luftaufbereitungsanlage (IC) oder dem Kühlkreis (CR) gehört, zu dem gesammelten Kondensat weitergeleitet werden, um sie auf eine Temperatur zu bringen, die geeignet ist, sie zu desinfizieren, bevor sie den Behälter (RL) versorgen, **dadurch gekennzeichnet, dass**, nachdem das gesammelte Kondensat auf die Desinfektionstemperatur gebracht wurde, und bevor es den Behälter (RL) versorgt, ein Teil der Kalorien, die es umfasst, zu einer Kältequelle weitergeleitet wird, der der Luftaufbereitungsanlage (IC) angehört.

2. Vorrichtung zum Zuführen von Flüssigkeit (MD), umfassend einen Flüssigkeitsbehälter (RL), i) Sammelmittel (MC), die dazu vorgesehen sind, mindestens einen Teil des Kondensats zu sammeln, das von einer Luftaufbereitungsanlage (IC) eines Systems (V) erzeugt wird, ferner umfassend einen Kühlkreis (CR) einer Verbrennungsmotors (MT), und ii) Austauschmittel (ME), die mit dem von den Sammelmitteln (MC) gesammelten Kondensat versorgt werden und dazu vorgesehen sind, Kalorien einer Wärmequelle, die der Luftaufbereitungsanlage (IC) oder dem Kühlkreis (CR) angehört, zu dem gesammelten Kondensat weiterzuleiten, um sie auf eine Temperatur zu bringen, die geeignet ist, sie zu desinfizieren, bevor sie in den Behälter (RL) weitergeleitet werden, **dadurch gekennzeichnet, dass** die Austauschmittel (ME) eine erste Rohrschlange (S1) umfassen, in der das gesammelte und auf die Desinfektionstemperatur gebracht Kondensat zirkuliert, und die mit einer Wärmequelle, die der Luftaufbereitungsanlage (IC) angehört, gekoppelt ist, um einen Teil der Kalorien des Kondensats an sie weiterzuleiten, bevor diese letztgenannten in den Behälter (RL) geleitet werden.

3. Vorrichtung nach Anspruch 2, **dadurch gekennzeichnet, dass** sie Kontrollmittel umfasst, die dazu vorgesehen sind, eine Dauer zu kontrollieren, während der die Weiterleitung der Kalorien in Abhängigkeit von Temperaturmessungen der Wärmequelle erfolgt.

4. Vorrichtung nach einem der Ansprüche 2 und 3, **dadurch gekennzeichnet, dass** die Austauschmittel (ME) mindestens eine zweite Rohrschlange (S2) umfassen, in der das gesammelte Kondensator zirkuliert, und die an die Kältequelle gekoppelt ist, um einen Teil ihrer Kalorien zu dem gesammelten Kondensat weiterzuleiten.

5. Vorrichtung nach einem der Ansprüche 2 bis 4, **dadurch gekennzeichnet, dass** sie dazu vorgesehen ist, die Flüssigkeit mit Hilfe einer Technik, ausgewählt in der Gruppe, umfassend mindestens die Vernebelung, das Versprühen und die Zerstäubung, in kleine Tropfen umzuwandeln.

6. Vorrichtung zur Luftaufbereitung (D) für ein System (V), umfassend eine Luftaufbereitungsanlage (IC), die Kondensat erzeugt, und einen Kühlkreis (CR) eines Verbrennungsmotors (MT), **dadurch gekennzeichnet, dass** sie eine Vorrichtung zum Zuführen von Flüssigkeit (MD) nach einem der Ansprüche 2 bis 5 umfasst.

7. Luftaufbereitungsanlage (IC) für ein System (V), umfassend ferner einen Kühlkreis (CR) eines Verbrennungsmotors (MT), **dadurch gekennzeichnet, dass** sie eine Vorrichtung zum Zuführen von Flüssigkeit (MD) nach einem der Ansprüche 2 bis 5 oder eine Luftaufbereitungsanlage (D) nach Anspruch 6 umfasst.

8. System (V), umfassend eine Luftaufbereitungsanlage (IC), die Kondensat erzeugt, und einen Kühlkreis (CR) eines Verbrennungsmotors (MT), **dadurch gekennzeichnet, dass** es ferner mindestens eine Vorrichtung zum Zuführen von Flüssigkeit (MD) nach einem der Ansprüche 2 bis 5 oder mindestens eine Luftaufbereitungsvorrichtung (D) nach Anspruch 6 umfasst.

9. System nach Anspruch 8, **dadurch gekennzeichnet, dass** die Luftaufbereitungsanlage (IC) einen Kältekreis (BF) umfasst, umfassend einen Kondensator (CD), der eine Leitung mit einem heißen Kältefluid im flüssigen Zustand versorgt und eine Wärmequelle darstellt.

10. System nach Anspruch 8, **dadurch gekennzeichnet, dass** die Luftaufbereitungsanlage (IC) einen Kältekreislauf (BF) umfasst, umfassend einen Kompressor (CP), der eine Leitung mit einem heißen Kältemittel im gasförmigen Zustand versorgt und eine Wärmequelle darstellt.

11. System nach Anspruch 8, **dadurch gekennzeichnet, dass** der Kühlkreis (CR) einen Warmlufterzeuger (AE) umfasst, der von einer Leitung mit einem heißen Kältefluid im flüssigen Zustand versorgt wird und eine Wärmequelle darstellt.

12. System nach Anspruch 8, **dadurch gekennzeichnet, dass** der Kühlkreis (CR) ein Abzweigungsgehäuse umfasst, das geeignet ist, einen Teil eines heißen Kühlfluids im flüssigen Zustand zu entnehmen, und das eine Wärmequelle darstellt.

13. System nach einem der Ansprüche 8 bis 12, **dadurch gekennzeichnet, dass** es ein Fahrzeug darstellt.

## Claims

1. A method for sanitizing a liquid for feeding a reservoir (RL) suitable for feeding a device for supplying liquid (MD) of a system (V) including an air treatment installation (IC) producing condensates and a cooling circuit (CR) of a combustion engine (MT), said method including a step in which at least a portion of said condensates is collected, then heat energy is transferred from a hot source, belonging to said air treatment installation (IC) or to said cooling circuit (CR), towards said collected condensates, so as to bring them to a temperature suitable for sanitizing them before they feed said reservoir (RL), **characterized in that** after having brought said collected condensates to said sanitizing temperature and before they feed said reservoir (RL), a portion of the heat energy which they include is transferred to a cold source belonging to said air treatment installation (IC).

2. A device for supplying liquid (MD) including a liquid reservoir (RL), i) collection means (MC) arranged to collect at least a portion of condensates produced by an air treatment installation (IC) of a system (V) further including a cooling circuit (CR) of a combustion engine (MT), and ii) exchange means (ME) fed with condensates collected by said collection means (MC) and arranged to transfer heat energy from a hot source, belonging to said air treatment installation (IC) or to said cooling circuit (CR), to said collected condensates, so as to bring them to a temperature suitable for sanitizing them before transferring them in said reservoir (RL), **characterized in that** said exchange means (ME) include a first coil (S1) in which circulate said condensates collected and brought to said sanitizing temperature and coupled to a hot source belonging to said air treatment installation (IC) so as to transfer to it a portion of the heat energy of said condensates before transferring the latter in said reservoir (RL).

3. The device according to claim 2, **characterized in that** it includes control means arranged to control a duration during which said transfer of heat energy is carried out as a function of temperature measurements of said hot source.

4. The device according to one of claims 2 and 3, **characterized in that** said exchange means (ME) include at least a second coil (S2) in which circulate said collected condensates and coupled to said cold source so as to transfer a portion of its heat energy to said collected condensates.

5. The device according to one of claims 2 to 4, **characterized in that** it is arranged to transform said liquid into small drops by means of a technique selected from a group including at least nebulising, misting and spraying.

6. An air treatment device (D) for a system (V) including an air treatment installation (IC) producing condensates and a cooling circuit CR) of a combustion engine (MT), **characterized in that** it includes a device for supplying liquid (MD) according to one of claims 2 to 5.

7. An air treatment installation (IC) for a system (V) further including a cooling circuit (CR of a combustion engine (MT), **characterized in that** it includes a device for supplying liquid (MD) according to one of claims 2 to 5 or an air treatment device (D) according to claim 6.

8. A system (V) including an air treatment installation (IC) producing condensates and a cooling circuit (CR) of a combustion engine (MT), **characterized in that** it further includes at least one device for supplying liquid (MD) according to one of claims 2 to 5 or at least one air treatment device (D) according to claim 6.

9. The system according to claim 8, **characterized in that** said air treatment installation (IC) includes a refrigeration circuit (BF) comprising a condenser (CD) feeding a duct with a hot refrigerant fluid, at liquid state and constituting a hot source.

10. The system according to claim 8, **characterized in that** said air treatment installation (IC) includes a refrigeration circuit (BF) comprising a compressor (CP) feeding a duct with a hot refrigerant fluid, at gaseous state and constituting a hot source.

11. The system according to claim 8, **characterized in that** said cooling circuit (CR) comprises an air heater (AE) fed by a duct with a hot cooling fluid, at liquid state and constituting said hot source.

12. The system according to claim 8, **characterized in that** said cooling circuit (CR) comprises a branching box suitable to extract a portion of a hot cooling fluid, at liquid state and constituting a hot source.

13. The system according to one of claims 8 to 12, **characterized in that** it constitutes a vehicle.
